# EUROPÄISCHE PATENTSCHRIFT

(11) **EP 2 372 177 B1**
(45) Veröffentlichungstag und Bekanntmachung des Hinweises auf die Patenterteilung: **25.06.2014**
(21) Anmeldenummer: 11157993.4
(22) Anmeldetag: 14.03.2011
(51) Int. Cl.: F16B 25/10, F16B 35/06

(54) **Spanplattenschraube**
Chipboard screw
Vis pour panneau aggloméré

(30) Priorität: 30.03.2010 DE 102010013952
(43) Veröffentlichungstag der Anmeldung: 05.10.2011
(73) Patentinhaber: Reisser Schraubentechnik GmbH, 74653 Ingelfingen-Criesbach (DE)
(72) Erfinder: Nölle, Klaus, 22397, Hamburg (DE)
(74) Vertreter: Dauster, Katja

(56) Entgegenhaltungen:
- DE-A1-102006 031 298
- DE-U1- 29 811 536

## Beschreibung

Die Erfindung betrifft eine Spanplattenschraube.

Spanplattenschrauben haben einen Schaft mit einem Spanplattengewinde sowie einen Senkkopf. Der Senkkopf soll es ermöglichen, dass der Kopf der Schraube in dem Holzmaterial versenkt wird.

Bei einer bekannten gattungsgemäßen Senkkopfschraube (DE 3706144 A ) ist die Unterseite des Schraubenkopfs in Schneidbereiche und Stützbereiche aufgeteilt, wobei die Stützbereiche in einer Kegelstumpffläche liegen. Der zwischen den Stützbereichen vorhandene Bereich bildet den Schneidbereich. In dem Schneidbereich sind Spitzen ausgebildet, die in weichem Material die Senkung in der Bohrung selbsttätig schneiden.

Zu diesem Zweck zeigen Schneiden in Drehrichtung.

Weitere Senkkopfschrauben sind bekannt, bei denen in der Unterseite des Senkkopfs Vertiefungen mit Schneidkanten ausgebildet sind. Dabei zeigen die Schneidkanten üblicherweise in Drehrichtung, damit der Schneidvorgang vor den Schneidkanten durchgeführt werden kann.

Der Erfindung liegt die Aufgabe zu Grunde, eine Senkkopfschraube zu schaffen, der insbesondere bei Spanplatten oder ähnlichem Material Verwendung finden kann.

Zur Lösung dieser Aufgabe schlägt die Erfindung eine Spanplattenschraube mit den im Anspruch 1 genannten Merkmalen vor. Weiterbildungen der Erfindung sind Gegenstand von Unteransprüchen.

Im Gegensatz zum Stand der Technik, bei dem die in Drehrichtung vordere Begrenzungswand tangential und die hintere Begrenzungswand radial verläuft, um dadurch eine in Drehrichtung zeigende scharfe Vorderkante zu bilden, sind hier die Vertiefungen gerade umgekehrt orientiert, um dadurch eine Druckentlastung und einen Ausgleich zu ermöglichen.

In Weiterbildung der Erfindung kann vorgesehen sein, dass im Querschnitt durch die Schraubenlängsachsen der Schraube der Winkel zwischen der vorderen Begrenzungswand der Vertiefung und der hinteren Begrenzungswand im Bereich von etwa 100° bis 110° liegt. Es handelt sich also fast um eine rechtwinklige Querschnittsform der Frästaschen.

In nochmaliger Weiterbildung der Erfindung kann vorgesehen sein, dass der Senkkopf zwei Abschnitte aufweist, wobei der an die Stirnfläche des Schraubenkopfs anschließende Bereich einen größeren Kegelwinkel aufweist als der zwischen diesem Bereich und dem Schaft der Schraube angeordnete weitere Bereich.

Erfindungsgemäß kann nun vorgesehen sein, dass die axiale Erstreckung der Frästaschen ausgehend von einer Ebene unmittelbar unterhalb der Stirnfläche oder auch von der Stirnfläche selbst bis etwa in den Übergangsbereich zwischen den beiden Bereichen unterschiedlichen Kegelwinkels reicht.

Das Verhältnis der axialen Längen beider Bereiche des Schraubenkopfs kann von etwa 3 zu 1 bis etwa 5 zu 1 reichen.

In Weiterbildung der Erfindung kann vorgesehen sein, dass die in Drehrichtung vordere Begrenzungswand der Frästaschen in einem Längsschnitt beziehungsweise einer Seitenansicht der Schraube parallel zur Schraubenlängsachse verläuft.

Erfindungsgemäß kann in Weiterbildung vorgesehen sein, dass die in Drehrichtung hintere Begrenzungswand der Frästaschen in einer Seitenansicht der Schraube längs einer schräg verlaufenden Linie in die kegelförmige Unterseite des Senkkopfs übergeht.

Vorzugsweise kann ein Senkkopf einer von der Erfindung vorgeschlagenen Spanplattenschraube sechs derartige Taschen aufweisen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht einer von der Erfindung vorgeschlagenen Spanplattenschraube;
- Figur 2: einen Querschnitt längs Linie II-II in Figur 1;
- Figur 3: eine vergrößerte Seitenansicht des Schraubenkopfs der Spanplattenschraube der Figur 1;
- Figur 4: eine perspektivische Darstellung eines Schraubenkopfs der Spanplattenschraube der Erfindung.

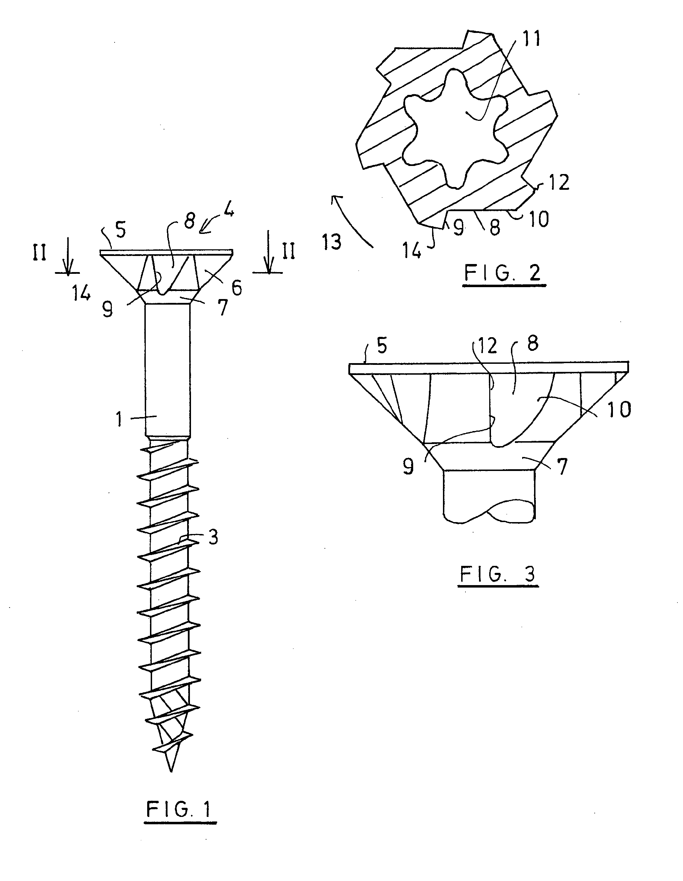

Die in Figur 1 in einer Seitenansicht dargestellte Spanplattenschraube nach der Erfindung enthält einen Schraubenschaft 1, der an einem, in der Figur 1 unteren Ende, in eine Schraubenspitze 2 übergeht. Etwa über zwei Drittel der Länge des Schraubenschafts 1 weist dieser ein Spanplattengewinde 3 auf, das sich bis in die Schraubenspitze 2 fortsetzt. Es kann sich bei dem Schraubengewinde 3 um ein eingängiges oder auch um ein zweigängiges Gewinde handeln.

An dem der Schraubenspitze 2 abgewandten in Figur 1 oberen Ende ist an dem Schraubenschaft 1 ein Schraubenkopf 4 ausgebildet, bei dem es sich um einen Senkkopf handelt. Dieser Senkkopf weist, unmittelbar an seine Stirnfläche 5 anschließend, einen ersten Bereich 6 auf, der sich etwa über drei Viertel der Länge des Schraubenkopfs erstreckt. An diesen ersten Abschnitt 6 schließt sich ein zweiter Abschnitt 7 an. In dem zweiten Abschnitt 7 ist der Kegelwinkel kleiner als in dem ersten Abschnitt 6. Beispielsweise beträgt der Kegelwinkel im Abschnitt 6 90° und in dem daran anschließenden kleineren Abschnitt 7 etwa 45°.

In der Kegelfläche des Senkkopfs 4 sind Vertiefungen in Form von Taschen 8 ausgebildet, in denen die Begrenzungsfläche des Schraubenkopfs gegenüber der Kegelfläche nach innen abweicht. Die in Einschraubrichtung vordere Begrenzungswand 9 jeder solchen Tasche 8 verläuft angenähert parallel zur Längsachse der Schraube. Die jeweils hintere Begrenzungswand 10 jeder Tasche 8 verläuft dagegen schräg unter einem Winkel von etwa 45° gegenüber einer Längsachse.

Von der Stirnfläche 5 des Schraubenkopfs aus führt eine Vertiefung in das Innere des Schraubenkopfs, wobei diese Vertiefung 11 den Schraubenantrieb bildet. Es kann sich dabei um die Form eines Sterns mit abgerundeten Flügeln handeln, wie dies in Figur 2 dargestellt ist. Aber auch alle anderen handelsüblichen Schraubenantriebsvertiefungen sind hier möglich.

Aus dem Querschnitt der Figur 2 kann man auch entnehmen, dass aufgrund der geschilderten Geometrie der Taschen die scharfe Kante 12 im Gegenuhrzeigersinn gerichtet ist, also entgegengesetzt der Einschraubrichtung. Die Einschraubrichtung ist in Figur 2 durch den Pfeil 13 angedeutet.

Die vergrößerte Darstellung des Schraubenkopfs in Figur 3 zeigt nochmals den Verlauf der Begrenzungswände 9, 10 der Taschen 8.

## Patentansprüche

1. Spanplattenschraube, mit
1.1 einem Schraubenschaft (1),
1.2 einer Schraubenspitze (2),
1.3 einem sich über den Schraubenschaft (1) bis in die Schraubenspitze (2) erstreckenden Gewinde (3), sowie mit
1.4 einem Senkkopf (4), der
1.4.1 an seiner Unterseite Frästaschen (8) aufweist, die
1.4.2 in einem Querschnitt durch die Schraube Dreieckform aufweisen,
**dadurch gekennzeichnet, dass**
1.4.3 die in Drehrichtung vordere Begrenzungswand (9) der Frästaschen (8) im Querschnitt etwa radial und die
1.4.4 in Drehrichtung hintere Begrenzungswand (10) der Frästaschen (8) im Querschnitt etwa tangential verläuft.

2. Spanplattenschraube nach Anspruch 1, bei der im Querschnitt durch die Schraubenlängsachse der Winkel zwischen der vorderen Begrenzungswand (9) und der hinteren Begrenzungswand (10) der Frästaschen (8) etwa 100° - 110° beträgt.

3. Spanplattenschraube nach Anspruch 1 oder 2, bei der der Senkkopf (4) zwei Abschnitte (6, 7) aufweist, wobei der an die Stirnfläche (5) des Schraubenkopfs anschließende Bereich (6) einen größeren Kegelwinkel aufweist als der zwischen diesem Bereich (6) und dem Schaft (1) der Schraube angeordnete weitere Bereich (7).

4. Spanplattenschraube nach Anspruch 3, bei der die axiale Erstreckung der Frästaschen (8) bis etwa in die Trennebene zwischen den beiden Abschnitten (6, 7) des Senkkopfs reicht.

5. Spanplattenschraube nach einem der vorhergehenden Ansprüche, bei der die in Drehrichtung vordere Begrenzungswand (9) der Frästaschen (8) in einem Längsschnitt parallel zur Schraubenlängsachse verläuft.

6. Spanplattenschraube nach einem der vorhergehenden Ansprüche, bei der die in Drehrichtung hintere Begrenzungswand (10) der Frästaschen (8) in einer Seitenansicht längs einer schräg verlaufenden Linie in die kegelförmige Unterseite des Senkkopfs übergeht.

## Claims

1. Chipboard screw, having
1.1 a screw shank (1),
1.2 a screw tip (2),
1.3 a thread (3) extending along the screw shank (1) as far as the screw tip (2), and also having
1.4 a countersunk head (4) which
1.4.1 has on its underside milling pockets (8) which
1.4.2 have a triangular shape in cross section through the screw, **characterized in that**
1.4.3 that boundary wall (9) of the milling pockets (8) that is at the front in the direction of rotation extends approximately radially in cross section and
1.4.4 that boundary wall (10) of the milling pockets (8) that is at the rear in the direction of rotation extends approximately tangentially in cross section.

2. Chipboard screw according to Claim 1, wherein, in cross section through the longitudinal axis of the screw, the angle between the front boundary wall (9) and the rear boundary wall (10) of the milling pockets (8) is approximately 100°-110°.

3. Chipboard screw according to Claim 1 or 2, wherein the countersunk head (4) has two sections (6, 7), wherein the region (6) adjoining the end face (5) of the screw head has a larger cone angle than the further region (7) arranged between this region (6) and the shank (1) of the screw.

4. Chipboard screw according to Claim 3, wherein the axial extent of the milling pockets (8) reaches approximately as far as the parting plane between the two sections (6, 7) of the countersunk head.

5. Chipboard screw according to one of the preceding claims, wherein that boundary wall (9) of the milling pockets (8) that is at the front in the direction of rotation extends parallel to the longitudinal axis of the screw in longitudinal section.

6. Chipboard screw according to one of the preceding claims, wherein that boundary wall (10) of the milling pockets (8) that is at the rear in the direction of rotation merges into the conical underside of the countersunk head along an obliquely extending line in side view.

## Revendications

1. Vis pour panneau d'aggloméré, dotée :
1.1 d'une tige de vis (1) ;
1.2 d'une pointe de vis (2) ;
1.3 d'un filet (3) s'étendant sur l'ensemble de la tige de vis (1) jusque dans la pointe de vis (2) ; et
1.4 d'une tête fraisée (4) comportant :
1.4.1 au niveau de son côté inférieur des poches de fraisage (8)
1.4.2 présentant une forme de triangle dans une section transversale traversant la vis ;
**caractérisée en ce que** :
1.4.3 la paroi de délimitation (9) avant, dans la direction de rotation, des poches de fraisage (8) s'étend quelque peu dans le plan radial en section transversale ; et
1.4.4 la paroi de délimitation (10) arrière, dans la direction de rotation, des poches de fraisage (8) s'étend quelque peu de façon tangentielle en section transversale.

2. Vis pour panneau d'aggloméré selon la revendication 1, dans laquelle l'angle entre la paroi de délimitation (9) avant et la paroi de délimitation (10) arrière des poches de fraisage (8) est approximativement de 100° - 110° dans la section transversale traversant l'axe longitudinal de vis.

3. Vis pour panneau d'aggloméré selon la revendication 1 ou 2, dans laquelle la tête fraisée (4) comporte deux sections (6, 7), la zone (6) connexe à la surface frontale (5) de la tête de vis présentant un angle conique plus important que l'autre zone (7) disposée entre cette zone (6) et la tige (1) de la vis.

4. Vis pour panneau d'aggloméré selon la revendication 3, dans laquelle l'extension axiale des poches de fraisage (8) atteint approximativement le plan de séparation prévu entre les deux sections (6, 7) de la tête fraisée.

5. Vis pour panneau d'aggloméré selon l'une quelconque des revendications précédentes, dans laquelle la paroi de délimitation (9) avant, dans la direction de rotation, des poches de fraisage (8) s'étend, en coupe longitudinale, parallèlement à l'axe longitudinal de vis.

6. Vis pour panneau d'aggloméré selon l'une quelconque des revendications précédentes, dans laquelle la paroi de délimitation (10) arrière, dans la direction de rotation, des poches de fraisage (8) se transforme, dans une vue de côté pratiquée le long d'une ligne oblique, pour devenir le côté inférieur de forme conique de la tête fraisée.
